# EUROPEAN PATENT SPECIFICATION

(11) **EP 1 520 685 B1**
(45) Date of publication and mention of the grant of the patent: **15.06.2011**
(21) Application number: 04023054.2
(22) Date of filing: 28.09.2004
(51) Int. Cl.: B29C 65/82, B29C 65/02, B41J 2/175

(54) **Synthetic resin part, synthetic resin assembly and method for manufacturing the same**
Kunststoffteil, Kunststoffzusammenbau und Herstellungsverfahren dafür
Pièce en matière synthétique, assemblage en matière synthétique et procédé pour sa fabrication

(30) Priority: 30.09.2003 JP 2003340542
(43) Date of publication of application: 06.04.2005
(73) Proprietor: Brother Kogyo Kabushiki Kaisha, Nagoya-shi, Aichi-ken 467-0841 (JP)
(72) Inventor: Katayama, Naoki, c/o Brother Kogyo K.K., Nagoya-shi Aichi-ken 467-8562 (JP)
(74) Representative: Hofer, Dorothea

(56) References cited:
- PATENT ABSTRACTS OF JAPAN vol. 2003, no. 09, 3 September 2003 (2003-09-03) & JP 2003 154578 A (INOAC CORP), 27 May 2003 (2003-05-27)

## Description

### BACKGROUND OF THE INVENTION

### Field of the Invention

The present invention relates to a technique for checking the welding degree of two synthetic resin parts which are welded together to constitute a synthetic resin assembly.

### Description of the Related Art

Usually, a synthetic resin assembly configured by plural synthetic resin-made parts, such as an ink cartridge which can store an ink to be supplied to an inkjet head, is assembled by welding the synthetic resin-made parts together by various welding methods such as heat welding and ultrasonic welding (for example, see JP-A-2000-43285 (Page 4, Fig. 1)). When the two synthetic resin parts to be welded together are welded in an insufficient amount, or contrarily in an excess amount, there arise the possibilities that the sealing property of the welded portion which must be sealed cannot be sufficiently ensured, and that the strength of the welded portion is insufficient. Conventionally, therefore, two synthetic resin parts are welded together, and thereafter the sealing property and strength of the welded portion are checked. Specifically, welded portions are checked by, for example, the following inspection methods. All of welded portions are subjected to a leakage inspection using a positive or negative air pressure, to check the sealing property of the welded portions. A destructive inspection is periodically conducted to check the strength of the welded portions.

JP-A-2003-154578 discloses a generic synthetic resin part and a generic synthetic resin assembly as well as a method of manufacturing a synthetic resin assembly including two synthetic resin parts which are to be welded together. In the method, welding quality is judged on whether a judging piece can be torn away from a weld surface or not.

### SUMMARY OF THE INVENTION

When such a leakage inspection, a destructive inspection, and the like are conducted on all synthetic resin assemblies, much labor and a prolonged time period are required, and the number of inspection steps is increased. When such inspections are conducted by a sampling method, there is the possibility that a synthetic resin assembly of defective welding erroneously passes the inspections to be shipped as it is.

It is an object of the invention to determine the welding degree after two synthetic resin parts are welded together by a simple and sure method, thereby reducing the number of inspection steps relating to the welding degree, and surely eliminating a synthetic resin assembly of defective welding.

The object of the invention is solved by the features of the independent claims. Further details of the invention are defined in the dependent claims.

### BRIEF DESCRIPTION OF THE DRAWINGS

The present invention may be more readily described with reference to the accompanying drawings:
Fig. 1 is a diagram of an ink cartridge and an inkjet printer according to an embodiment of the invention;
Fig. 2 is an enlarged sectional view of a buffer tank in the vicinity of an atmospheric air introducing port shown in Fig. 1;
Fig. 3 is a plan view of the buffer tank in the vicinity of the atmospheric air introducing port shown in Fig. 1;
Fig. 4A is an enlarged plan view of the vicinity of two projections in Fig. 3 (before welding of a film), and Fig. 4B is a sectional view taken along the line IVB-IVB in Fig. 4A;
Fig. 5A is an enlarged plan view of the vicinity of the two projections in Fig. 3 (in a satisfactory welding state), and Fig. 5B is a sectional view taken along the line VB-VB in Fig. 5A;
Fig. 6A is an enlarged plan view of the vicinity of the two projections in Fig. 3 (in an insufficient welding state), and Fig. 6B is a sectional view taken along the line VIB-VIB in Fig. 6A;
Fig. 7A is an enlarged plan view of the vicinity of the two projections in Fig. 3 (in an excessive welding state), and Fig. 7B is a sectional view taken along the line VIIB-VIIB in Fig. 7A;
Fig. 8 is a partially fragmentary plan view of the ink cartridge;
Fig. 9A is a plan view showing a communication part forming member, and Fig. 9B is a sectional view of the member;
Fig. 10A is an enlarged plan view showing main portions of Fig. 9, and Fig. 10B is an enlarged sectional view; and
Figs. 11A to 11C are diagrams showing welding states of a cartridge body and the communication part forming member, Fig. 11A shows the satisfactory welding state, Fig. 11B shows the insufficient welding state, and Fig. 11C shows the excessive welding state.

### DETAILED DESCRIPTION OF THE PREFERRED EMBODIMENTS

An embodiment of the invention will be described. In the embodiment, the invention is applied to an ink cartridge and an inkjet printer to which the ink cartridge is to be attached.

First, an inkjet printer 1 to which an ink cartridge 3 is to be attached will be described.

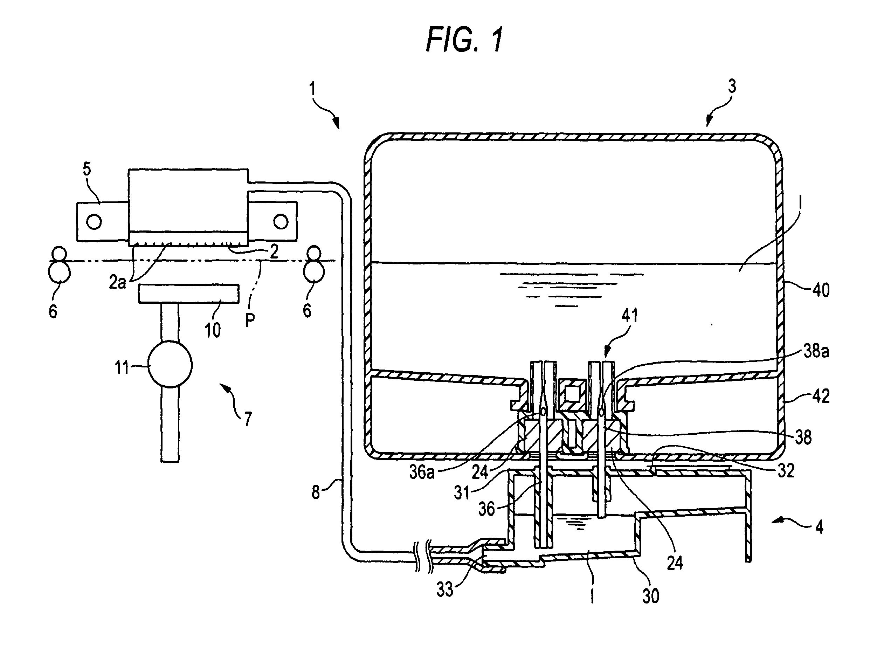

As shown in Fig. 1, the inkjet printer 1 has: an inkjet head 2 having nozzles 2a from which an ink I is ejected toward a recording sheet P; a buffer tank 4 which is connected to the inkjet head 2 via a supply tube 8, and which retains the ink I flowing from an ink cartridge 3 that is attached above the buffer tank; a carriage 5 which linearly moves the inkjet head 2 in one direction in a reciprocal manner; a transportingmechanism 6 which transports the recording sheet P; and a purging device 7 which sucks air bubbles in the inkjet head 2 and the thickened ink I.

In the inkjet printer 1, the ink I is supplied from the buffer tank 4 to which the ink cartridge 3 is attached, to the nozzles 2a of the inkjet head 2 via the supply tube 8. While the inkjet head 2 is reciprocally moved by the carriage 5 in the direction perpendicular to the plane in Fig. 1, the ink I is ejected from the nozzles 2a toward the recording sheet P which is transported by the transporting mechanism 6 in a lateral direction in Fig. 1, thereby conducting a printing process on the recording sheet P. In order to prevent the ink I from leaking from the nozzles 2a in the state where the ink I is not ejected from the nozzles 2a, the nozzles 2a are placed in a position which is higher than the level of the ink I in the buffer tank 4.

The purging device 7 has: a purge cap 10 which is movable in approaching/separating directions to an ink ejection surface, and which can cover ink ejection surface of the inkjet head 2; and a suction pump 11 which sucks the ink I from the nozzles 2a. When the inkjet head 2 is outside the printable range where the printing process can be conducted on the recording sheet P, air bubbles entering the inkjet head 2, and the ink I which is thickened as a result of evaporation of water can be sucked from the nozzles 2a by the suction pump 11.

The buffer tank 4 maintains the level of the ink I stored therein to suppress variation of the back pressure acting on the nozzles 2a. As shown in Fig. 1, the ink cartridge 3 is attached above the buffer tank 4 so that the ink I in the ink cartridge 3 flows into the buffer tank 4. The buffer tank 4 has a tank body 30 which stores the ink I, and a top plate 31 which covers the upper portion of the tank body 30. The tank body 30 and the top plate 31 are made of a synthetic resin. An atmospheric air introducing port 32 through which the atmospheric air is introduced into the buffer tank 4 is formed in the buffer tank 4. An ink outflow port 33 to which the supply tube 8 is connected to enable the ink I to outflow into the nozzles 2a is formed in the bottom of the tank body 30.

An ink inflow pipe 36 through which the ink I in the ink cartridge 3 flows into the buffer tank 4, and an atmospheric air outflow pipe 38 through which the atmospheric air is flown into the ink cartridge 3 are disposed in the top plate 31 of the buffer tank 4 so as to be vertically passed therethrough.

Each of the ink inflow pipe 36 and the atmospheric air outflow pipe 38 is configured by a sharp-pointed needle-like hollow member which is made of a metal. Openings 36a, 38a are formed in tip end portions of the ink inflow pipe 36 and the atmospheric air outflow pipe 38, respectively. The ink inflow pipe 36 extends lower than the atmospheric air outflow pipe 38.

The ink inflow pipe 36 and the atmospheric air outflow pipe 38 are passed through two plug members 24 of the ink cartridge 3, respectively, so that, when the ink cartridge 3 is attached to the upper side of the buffer tank 4, the atmospheric air in the buffer tank 4 outflows into the ink cartridge 3 through the atmospheric air outflow pipe 38, and, in place of the atmospheric air, the ink I in the ink cartridge 3 inflows into the buffer tank 4 through the ink inflow pipe 36. When the level of the ink I in the buffer tank 4 is raised to the vicinity of the lower end of the atmospheric air outflow pipe 38 as shown in Fig. 1, the atmospheric air does not outflow into the ink cartridge 3 through the atmospheric air outflow pipe 38, and hence the ink I in the ink cartridge 3 does not inflow into the buffer tank 4.

When the ink I is ejected from the nozzles 2a of the inkjet head 2 in this state, the ink I in the buffer tank 4 is supplied to the inkjet head 2, and hence the level of the ink I in the buffer tank 4 is lowered, so that the level of the ink I separates from the lower end of the atmospheric air outflow pipe 38. As a result, the atmospheric air flows into the atmospheric air outflow pipe 38 from the lower end of the pipe 38, the atmospheric air in the buffer tank 4 out flows into the ink cartridge 3, and at the same time the ink I inflows into the buffer tank 4 through the ink inflow pipe 36.

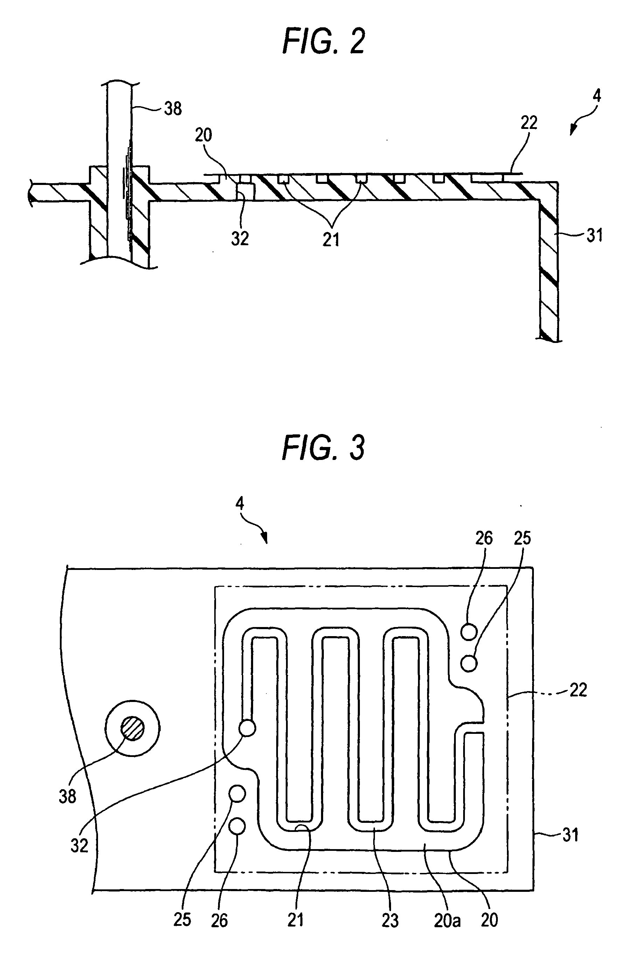

As shown in Figs. 2 and 3, a hill portion 20 which is partly raised from the outer face of the top plate 31 of the buffer tank 4 is formed in theperipheryof the atmospheric air introducing port 32 formed in the top plate 31. A horizontal surface (weld surface 20a) which is parallel to the outer face of the buffer tank 4 is formed on the surface of the hill portion 20. A long groove 21 (labyrinth) in which one end communicates with the atmospheric air introducing port 32 and the other end communicates with the exterior of the buffer tank 4 is formed in the surface of the hill portion 20 in a meandering or labyrinth-like manner.

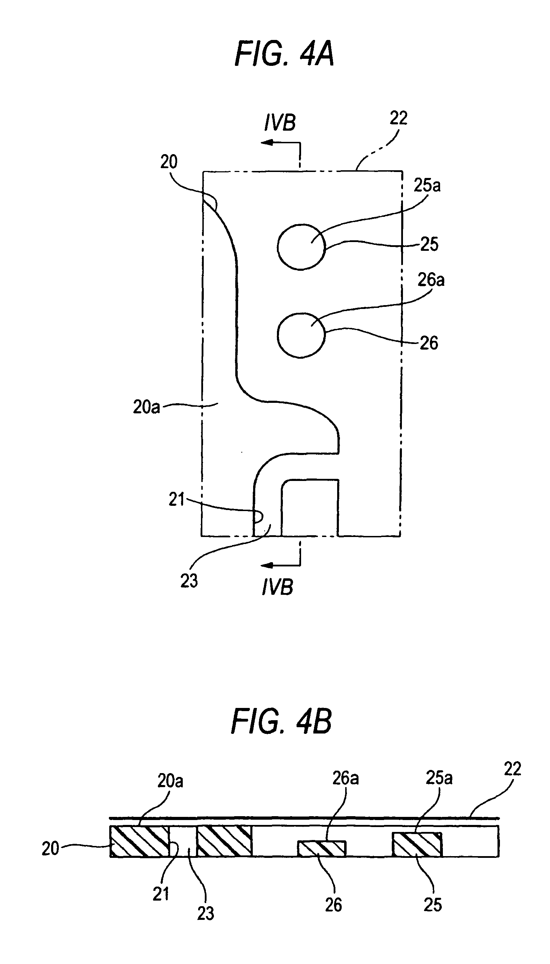

As shown in Figs. 4A and 4B, a see-through synthetic resin-made film 22 is welded by heat welding to the weld surface 20a of the hill portion 20 so as to cover the groove 21. The groove 21 and the film 22 constitute an atmospheric air introducing path 23 through which the atmospheric air is introduced into the buffer tank 4. The atmospheric air introducing path 23 operates as a flow path for supplying the atmospheric air into the atmospheric air introducing port 32 of the buffer tank 4, and exerts functions of preventing dust and the like from entering the buffer tank 4 by means of the complex and long shape of the flow path, and suppressing evaporation of water in the ink I in the buffer tank 4, thereby preventing the ink I from being thickened. A grain finish is previously applied to the film 22. Therefore, the portion of the buffer tank 4 with which the film 22 is not in close contact can be seen through the film 22 in a slightly blurred manner.

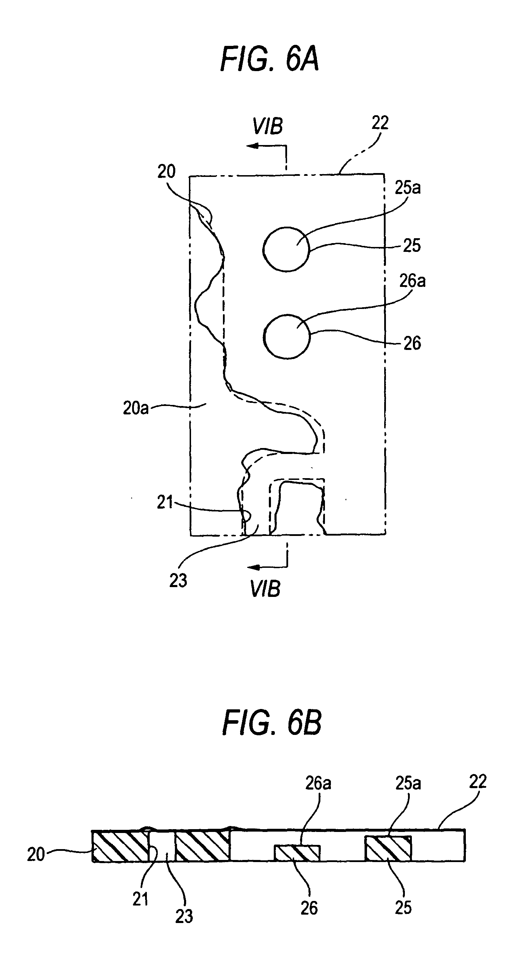

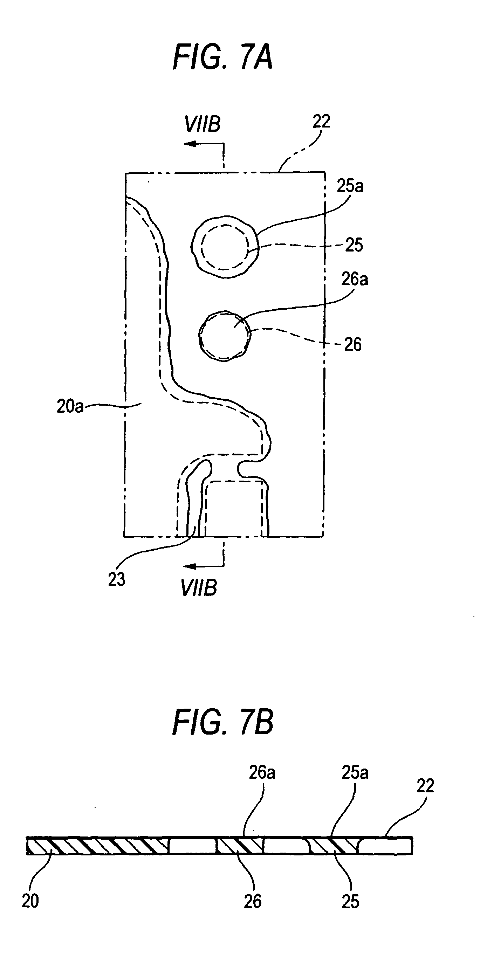

When the synthetic resin-made film 22 is welded to the weld surface 20a by an insufficient weld amount, a portion where the film 22 is not insufficiently welded is produced in the weld surface 20a, and the atmospheric air introducing path 23 is short-circuited in the portion to cause air leak. Therefore, the atmospheric air introducing path 23 cannot be ensured to have a length which is required for preventing entrance of dust and evaporation of water in the ink from occurring (see Figs. 6A and 6B). By contrast, when the weld amount of the film 22 is excessively large, the molten synthetic resin flows into the groove 21 to fill a part of the groove 21, thereby blocking the atmospheric air introducing path 23 (see Figs. 7A and 7B).

To comply with the above, two columnar projections 25, 26 in which the tops 25a, 26a are lower in level than the weld surface 20a of the buffer tank 4 and the film 22 and have different heights are formed in the vicinity of the hill portion 20. The tops 25a, 26a of the two projections 25, 26 are formed so as to have horizontal faces. The positions of the tops 25a, 26a of the projections 25, 26 are set so that the welding degree of the film 22 is made satisfactory in the state where the top 25a of the projection 25 which is closer to the weld surface 20a (the separation distance from the weld surface 20a is shorter) is welded to the film 22, and the top 26a of the projection 26 which is remoter from the weld surface 20a (the separation distance from the weld surface 20a is longer) is not welded to the film 22.

Next, production steps of assembling the buffer tank 4 will be described. First, the buffer tank 4 and the film 22 which have the above-mentioned configuration are formed (first step) . Next, the film 22 is welded to the buffer tank 4 so as to cover the hill portion 20 and the two projections 25, 26. In the welding, the film 22 is welded while welding conditions such as the welding temperature and the welding time are adequately set so as to produce the state where the top 25a which is closer to the weld surface 20a is welded to the film 22, and the top 26a which is remoter from the weld surface 20a is not welded to the film 22 (second step).

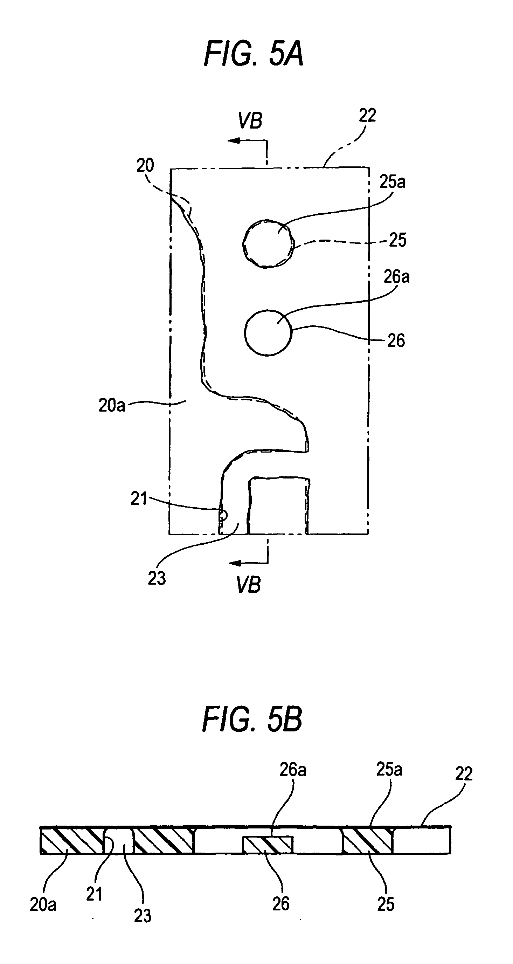

In order to check the actual welding degree after the film 22 is welded to the buffer tank 4 as described above, whether the tops 25a, 26a of the two projections 25, 26 are welded to the film 22 or not are checked in a visual manner from the side of the surface of the film 22. In accordance with the result of the check, the welding degree is determined (third step). Specifically, when, as shown in Figs. 5A and 5B, the top 25a of the projection 25 which is closer to the weld surface 20a is welded to the film 22, and the top 26a of the projection 26 which is remoter from the weld surface 20a is not welded to the film 22, it is determined that the welding degree is normal. By contrast, when both the tops 25a, 26a of the two projections 25, 26 are not welded to the film 22 as shown in Figs. 6A and 6B, it is determined that the welding degree is insufficient, and, when both the tops 25a, 26a of the two projections 25, 26 are welded to the film 22 as shown in Figs. 7A and 7B, it is determined that the welding degree is excessive. The buffer tank 4 of such defective welding is rejected.

Since the film 22 is a transparent film, whether the film 22 is welded to the tops 25a, 26a or not can be easily checked in a visual manner from the side of the surface of the film 22. Specifically, as shown in Figs. 5A to 7B, when the film 22 is welded to the tops 25a, 26a, the shapes of the circular tops 25a, 26a are changed, but, when the film is not welded, the tops remain to have a circular shape. Such a shape change of the tops 25a, 26a can be easily checked from the surface. Moreover, the film 22 is previously grain finished. In the state where the film 22 is not welded to the tops 25a, 26a of the projections 25, 26, therefore, the tops 25a, 26a are seen through the film 22 in a blurred manner. By contrast, when the film 22 is welded to the tops 25a, 26a, the tops 25a, 26aareclearlyseen. Therefore, whether the film is welded to the tops 25a, 26a or not can be checked more easily.

Next, the ink cartridge 3 will be described.

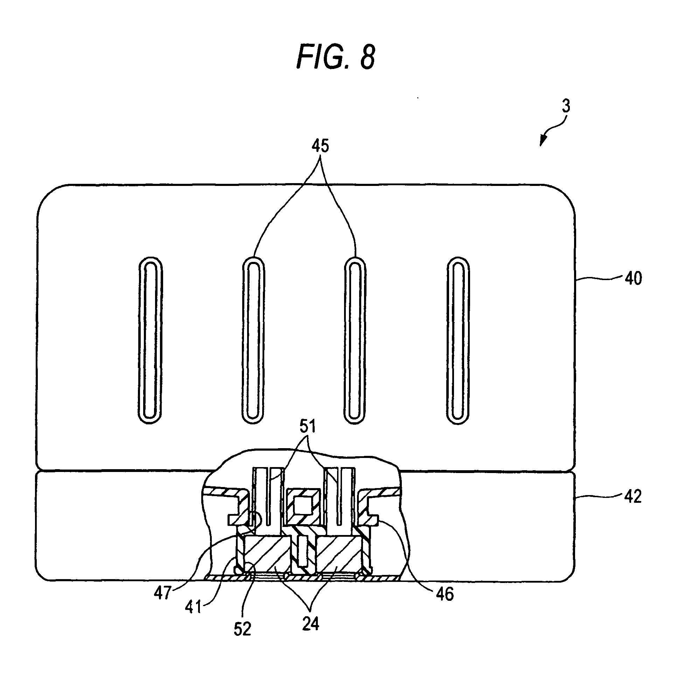

As shown in Figs. 1 and 8, the ink cartridge 3 has: a cartridge body 40 which can store the ink I; a communication part forming member 41 which forms communication holes (communication part) that allow the interior and exterior of the cartridge body 40 to communicate with each other; and a cover member 42 which cover a lower portion of the cartridge body 40.

The cartridge body 40 is a rectangular parallelepiped case which is made of a synthetic resin. Four ribs 45 which vertically elongate are disposed on the cartridge body 40. The four ribs 45 ensure the strength of the cartridge body 40 in a negative pressure state which is produced by negatively pressurizing the interior of the cartridge body 40 to conduct deaeration after the ink I is poured into the cartridge body 40. A flange 46 is disposed on the lower end of the cartridge body 40. Two attachment holes 47 for attaching the communication part forming member 41 to the cartridge body 40 are formed in the flange 46.

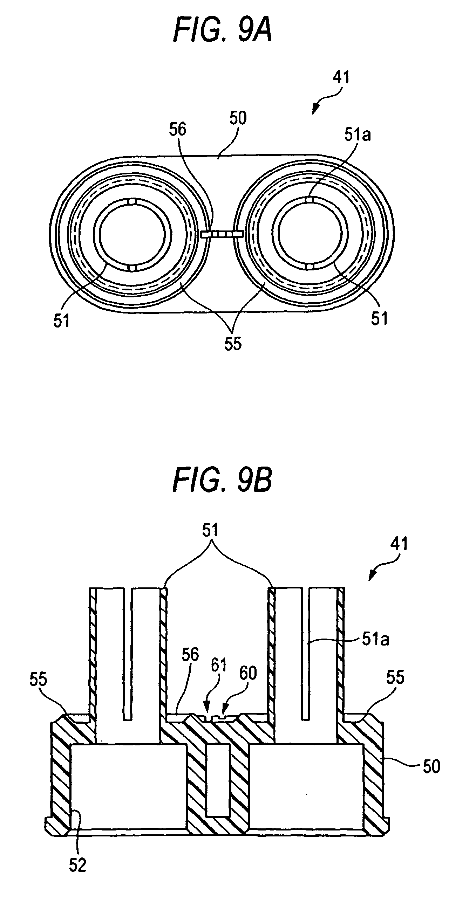

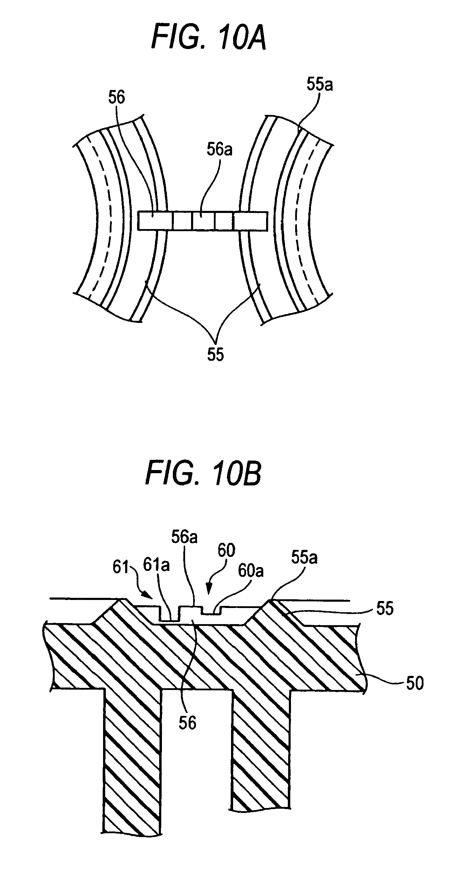

In the communication part forming member 41, as shown in Figs. 9A and 9B, a base part 50 and two tubular parts 51 which upward extend from the base part 50 are integrally formed by a synthetic resin. The base part 50 is formed into an approximately elliptic shape in a plan view. Two communication holes 52 which allow the interior and exterior of the cartridge body 40 to communicate with each other are formed in the base part 50. The two plug members 24 which are elastic (for example, made of rubber) to prevent the ink from leaking are pressingly inserted into the two communicationholes 52, respectively. When the ink cartridge 3 is attached to the upper side of the buffer tank 4, the tip end portions of the ink inflow pipe 36 and the atmospheric air outflow pipe 38 which have a needle-like hollow shape are passed through the two plug members 24, respectively. As shown in Figs. 9A, 9B, 10A and 10B, two annular protrusions 55 which surround respectively the two tubular parts 51, and a connection protrusion 56 which extends in a lateral direction in Figs. 9A and 9B to connect the two annular protrusions 55 together are formed on the upper end portion of the base part 50 so as to upward protrude therefrom.

The two tubular parts 51 are inserted through the two attachment holes 47 formed in the cartridge body 40, respectively. In a side face of each of the two tubular parts 51, a slit 51a which elongates in the longitudinal direction of the tubular part 51 is formed. The slits 51a allow the ink I remaining in the cartridge body 40 to flow into the tubular parts 51 in order to use up the ink I in the cartridge body 40.

In the state where the communication part forming member 41 is attached to the lower end of the cartridge body 40, the cover member 42 is welded to a lower portion of the cartridge body 40 by ultrasonic welding or the like.

In the communication part forming member 41, weld surfaces 55a, 56a of the upper ends of the annular protrusions 55 and connection protrusion 56 of the base part 50 are welded to the lower end face of the flange 46 by a welding method such as ultrasonic welding in the state where the two tubular parts 51 are passed through the attachment holes 47, respectively. When the welding amount of the cartridge body 40 and the communication part forming member 41 is insufficient, there arise the possibilities that the sealing property between the cartridge body 40 and the communication part forming member 41 cannot be ensured and the ink leaks, and that the strength of the welded portion is insufficient. By contrast, when the welding amount of the cartridge body 40 and the communication part forming member 41 is excessive, there is the possibility that the dimensional error in the height direction of the ink cartridge 3 is increased so that, for example, the ink cartridge 3 cannot be attached to the correct position with respect to the buffer tank 4. Moreover, there is the possibility that the synthetic resin overmelts because of excessive welding to protrude from the welded portion, thereby causing the communication part forming member 41 not to be correctly fitted into the attachment holes 47 of the cartridge body 40.

To comply with the above, as welding degree checking portions for checking the welding degree of the cartridge body 40 and the communication part forming member 41, two groove-like recesses 60, 61 which elongate in the direction perpendicular to the surface of the sheet of Fig. 10B, and in which separation distances between the weld surface 56a and bottoms 60a, 61a are different from each other are formed in the connection protrusion 56 of the base part 50. In the two groove-like recesses 60, 61, both ends in the direction perpendicular to the surface of the sheet of Fig. 10B are opened, so that the welding states of the bottoms 60a, 61a of the recesses 60, 61 can be checked in a visual manner. The positions of the bottoms 60a, 61a of the two recesses 60, 61 are set so that the welding degree of the cartridge body 40 and the communication part forming member 41 is made satisfactory in the state where the bottom 60a of the recess 60 which is closer to the weld surface 56a (the separation distance from the weld surface 56a is shorter) is welded to the cartridge body 40, and the bottom 61a of the recess 61 which is remoter from the weld surface 56a (the separation distance from the weld surface 56a is longer) is not welded to the cartridge body 40.

Next, production steps of assembling the ink cartridge 3 will be described. First, the cartridge body 40 and the communication part forming member 41 which have the above-mentioned configuration are formed (first step). Next, the cartridge body 40 and the communication part forming member 41 are welded together while welding conditions such as the welding time are adequately set so as to produce the state where the bottom 60a which is closer to the weld surface 56a is welded to the flange 46 of the cartridge body 40, and the bottom 61a which is remoter from the weld surface 56a is not welded to the flange 46 (second step).

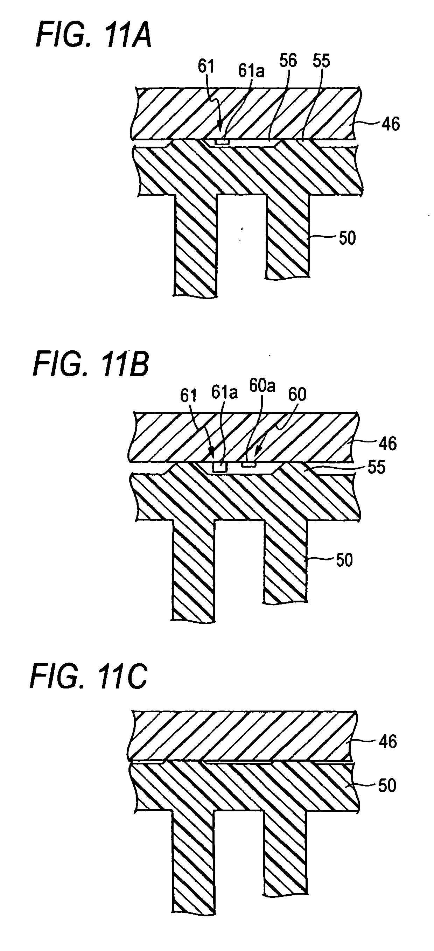

In order to check the actual welding degree after the base part 50 of the communication part forming member 41 is welded to the flange 46, whether the bottoms 60a, 61a of the two recesses 60, 61 are welded to the lower end face of the flange 46 of the cartridge body 40 or not is checked in a visual manner from a lateral side (in the direction perpendicular to the surface of the sheet of Fig. 10B). In accordance with the result of the check, the welding degree is determined (third step). Specifically, when, as shown in Fig. 11A, the bottom 60a of the recess 60 which is closer to the weld surface 56a is welded to the flange 46, and the bottom 61a of the recess 61 which is remoter from the weld surface 56a is not welded to the flange 46, it is determined that the welding degree is normal. By contrast, when both the bottoms 60a, 61a of the two recesses 60, 61 are not welded to the flange 96 as shown in Fig. 11B, it is determined that the welding degree is insufficient, and, whenboth the bottoms 60a, 61a of the two recesses 60, 61 are welded to the flange 46 as shown in Fig. 11C, it is determined that the welding degree is excessive. The ink cartridge 3 of such defective welding can be rejected before shipment.

According to the embodiment, the method of manufacturing a synthetic resin assembly 3, 4 is characterized in that a number of the plural welding degree checking portions formed in the one synthetic resin part is two, and, in the step of determining the welding degree, the welding degree is determined normal in the case where one of the welding degree checking portions which has a shorter separation distance from the weld surface is welded to the other synthetic resin part, and another one of the welding degree checking portions which has a longer separation distance is not welded to the other synthetic resin part. As described above, only in the case where the welding degree checking portion which has a shorter separation distance from the weld surface is welded to the other synthetic resin part, and that which has a longer separation distance from the weld surface is not welded to the other synthetic resin part, it is determined that the welding degree is normal, and, in another case, it is determined that the welding degree is defective (insufficient welding or excessive welding). Therefore, the welding degree of the two synthetic resin parts can be easily checked.

Also, the method of manufacturing a synthetic resin assembly 3 is characterized in that plural recesses are formed in the one synthetic resin part 41, separation distances from the weld surface to bottoms of the recesses being different from each other, and the welding degree checking portions are configured by the bottoms of the recesses, respectively. Therefore, each of the bottoms 60a, 61a of the recesses having the different separation distances from the weld surface is checked in a visual manner or the like whether it is welded to the other synthetic resin part or not. On the basis of the welding states, it is possible to easily determine whether the welding amount of the two synthetic resin parts is adequate or not.

Further, the method of manufacturing a synthetic resin assembly 4 is characterized in that plural projections 25, 26 are formed on the one synthetic resin part, positions of tops of the projections being lower in level than the weld surface, and different from each other, and the welding degree checking portions are configured by the tops of the projections, respectively. Therefore, each of the tops of the projections in different positions is checked in a visual manner or the like whether it is welded to the other synthetic resin part or not. On the basis of the welding states, it is possible to easily determine whether the welding amount of the two synthetic resin parts is adequate or not.

Also, the method of manufacturing a synthetic resin assembly 3 is characterized in that the two synthetic resin parts are parts constituting an ink cartridge 3. Therefore, it is possible to easily determine whether the welding degree of the two synthetic resin parts constituting the ink cartridge is adequate or not.

Moreover, the method of manufacturing a synthetic resin assembly 3 is characterized in that the two synthetic resin parts are a cartridge body which can store an ink to be supplied to an inkjet head, and a communication part forming member which forms a communication part that allows an interior and an exterior of the cartridge body to communicate with each other. On the basis of the welding states of the plural welding degree checking portions, therefore, the welding degree of the cartridge body and the communication part forming member canbe determined easily and surely. Consequently, it is possible to surely reject an ink cartridge of defective welding in which the sealing property and strength are made insufficient by a welding failure in the welded portion, or the synthetic resin which overmelts because of excessive welding protrudes from the welded portion.

Also, the method of manufacturing a synthetic resin assembly 4 is characterized in that the two synthetic resin parts are a container 30 which can store an ink to be supplied to an inkjet head, and a film 22 which is to be welded to the container. Therefore, the welding degree of the container and the film can be easily determined, and it is possible to surely reject a container in which welding to the film is defective. The kind of the container is not particularly restricted as far as it can store an ink. For example, the method of the seventh aspect of the invention can be applied to an ink cartridge body of an ink cartridge which is to be attached to on an inkjet head, an ink tank which is disposed in an inkjet printer, or the like.

Moreover, the method of manufacturing a synthetic resin assembly 4 is characterized in that the film 22 is a transparent film. Since the film has the see-through property, whether the tops of the projections are welded to the film or not can be easily checked in a visual manner from the side of the surface of the film.

Further, the method of manufacturing a synthetic resin assembly 4 is characterized in that the film is previously grain finished. The transparent film is previously grain finished. In the case where the top of one of the projections is not welded to the film, when the assembly is seen from the side of the surface of the film, therefore, the top which is not in close contact with the film is seen blurred. By contrast, in the case where the top is welded to the film, the welded portion is distinctly seen, and hence whether the tops of the projections are welded to the film or not can be easily checked in a visual manner from the side of the surface of the film.

Furthermore, the method of manufacturing a synthetic resin assembly 4 is characterized in that the container has: plural projections 25, 26 which project from an outer face of the container; and a hill portion 20 which is further raised from the outer face than the plural projections, a groove 21 is formed in a surface portion of the hill portion, one end of the groove communicating with an atmospheric air introducing port which allows atmospheric air to be introduced into the container, and another end of the groove communicating with an exterior of the container, the film is welded to a surface of the hill portion to cover the groove and the projections, and an atmospheric air introducing path through which atmospheric air is introduced into the container is configured by the groove and the film.

When the film is welded to the surface of the container, the film is welded so as to cover the groove formed in the hill portion, and the atmospheric air introducing path is configured by the groove and the film. When the welding amount of the film is insufficient, the sealing property of the atmospheric air introducing path becomes poor, and air leak from the atmospheric airintroducingpathoccurs. Bycontrast, when the welding amount of the film is excessive, the groove is filled with the synthetic resin which melts during the welding process, and the atmospheric air introducing path is blocked. Therefore, the plural projections in which the positions of the tops are different from each other and lower in level than the surface of the hill portion are disposed, thereby enabling the welding degree of the film to be easily checked depending on whether each of the tops of the projections in different positions is welded to the film or not.

Also, the method of manufacturing a synthetic resin assembly 3 is characterized by the step of determining a welding degree based on whether the state where the bottom of one of the two recesses which has a shorter separation distance from the weld surface is welded to the cartridge body, and the bottom of another one of the two recesses which has a longer separation distance from the weld surface is not welded to the cartridge body is attained or not. After the cartridge body and the communicationpart formingmember areweldedtogether, therefore, the actual welding degree is checked, so that a product of defective welding can be surely rejected.

Furthermore, the method of manufacturing a synthetic resin assembly 4 is characterized by the step of determining a welding degree based on whether the state where the top of one of the two projections which has a shorter separation distance from the weld surface is welded to the film, and the top of another one of the two recesses which has a longer separation distance from the weld surface is not welded to the film is attained or not. After the film is welded to the container, therefore, the actual welding degree is checked, so that a product of defective welding can be surely rejected.

Next, modifications in which the embodiment is variously modified will be described. The components identical with those of the embodiment are denoted by the same reference numerals, and their description is often omitted.
1) In the embodiment, when the film 22 is to be welded to the buffer tank 4, the welding conditions such as the welding time are adequately set so as to produce the state where the one top 25a is welded to the film 22, and the other top 26a is not welded to the film 22. Alternatively, the film 22 may be welded to the buffer tank 4 while not particularly setting the welding conditions, and whether the two tops 25a, 26a are welded to the film 22 or not may be thereafter checked to determine the welding degree. Also in the case where the communication part forming member 41 is to be welded to the cartridge body 40 of the ink cartridge 3, similarly, welding may be conducted while not particularly setting the welding conditions, and whether the bottoms 60a, 61a of the two recesses 60, 61 are welded to the cartridge body 40 or not may be thereafter checked to determine the welding degree.
2) In the embodiment, after the film 22 is welded to the buffer tank 4 (second step), the welding degree is determined by checking whether the two tops 25a, 26a are welded to the film 22 or not (third step). The determining step is not required to be conducted on all buffer tanks 4 to which films 22 are welded, and may be conducted only on buffer tanks 4 which are extracted at an arbitrary rate. In this case, in order to prevent the yield frombeing lowered, the adequate setting of the welding conditions must be conducted. Also in the case where communication part forming members 41 are to be welded to cartridge bodies 40 of ink cartridges 3, similarly, the determination of the welding degree may be conducted only on a part of ink cartridges 3.
3) The number of the projections which are used for checking the welding degree of the buffer tank 4 and the film 22 is not restricted to two. Three or more projections may be formed on the buffer tank 4, and the welding degree may be determined based on whether the tops of the plural projections are welded to the film 22 or not. Similarly, the number of the recesses which are used for checking the welding degree of the cartridge body 40 of the ink cartridge 3 and the communication part forming member 41 is not restricted to two. Three or more recesses may be formed in the communication part forming member. Such plural recesses may be formed in the cartridge body 40.
4) The film 22 which is to be welded to the buffer tank 4 is not limited to a transparent one. Alternatively, a film which cannot be seen through may be used. In the alternative, whether the film 22 is welded to the two projections 25, 26 or not is checked by conducting visual observation from the lateral side of the buffer tank 4.
5) The inkjet printer 1 in the embodiment has the buffer tank 4 which can store the ink I, and the film 22 is welded to the buffer tank 4 to form the atmospheric air introducing path 23. The invention can be applied also to an inkjet printer having no buffer tank. For example, a groove may be formed in the surface of the cartridge body 40 of the ink cartridge 3 which can store the ink I, and the synthetic resin-made film 22 may be welded to the surface of the cartridge body 40 so as to cover the groove, thereby configuring an atmospheric air introducing path through which the atmospheric air is introduced into the cartridge body 40. In order to check the welding degree of the film 22, plural projections in which the positions of the tops are lower in level than the weld surface of the film 22 and different from each other are formed in the vicinity of the groove formed in the cartridge body 40.
6) In the embodiment, two welding degree checking portion sets each configured by the tops 25a, 26a of the two projections 25, 26 are formed for the groove 21 (labyrinth) serving as a welding object (see Fig. 3). It is necessary to form at least one welding degree checking portion set. When required, three or more sets may be formed. In the embodiment, the welding degree checking portion sets each configured by the tops 25a, 26a of the two projections 25, 26 are formed in the periphery of the groove 21. In the case where the area occupied by the groove 21 (the area of the hill portion 20) is large, in order to check the welding degree in a region between meandering groove portions constituting the groove 21 (for example, the vicinity of the middle of the hill portion 20), at least one welding degree checking portion set may be formed between the meandering groove portions of the groove 21. The welding degree checking portion can be disposed in desired positions and at a desirednumber in accordance with the area and shape of the welding region.

## Claims

1. A method of manufacturing a synthetic resin assembly (4, 3) including two synthetic resin parts (30, 22; 40, 41) which are to be welded together, the method comprising the steps of:
forming plural welding degree checking portions (25, 26; 60, 61) in one of the two synthetic resin parts (30, 22; 40, 41), the welding degree checking portions (25, 26; 60, 61) being lower in level than a weld surface (20a; 55a, 56a) of the synthetic resin part, and separated from the weld surface (20a;55a,56a) by different separation distances;
welding the two synthetic resin parts (30, 22; 40, 41) together; and determining a welding degree of the two synthetic resin parts (30, 22; 40, 41), based on wether each of the plural welding degree checking portion (25, 26; 60, 61) formed in the one synthetic resin part (30; 41) is welded to another synthetic resin part (22; 40) or not.

2. The method of manufacturing a synthetic resin assembly according to claim 1, wherein a number of the plural welding degree checking portions (25, 26; 60, 61) formed in the one synthetic resin part (30; 41) is two, and, in the step of determining the welding degree, the welding degree is determined normal in the case where one of the welding degree checking portions (25; 60) which has a shorter separation distance from the weld surface (20a; 55a, 56a) is welded to the other synthetic resin part (22; 40), and another one of the welding degree checking portions (26; 61) which has a longer separation distance is not welded to the other synthetic resin part (22; 40).

3. The method of manufacturing a synthetic resin assembly according to claim 1 or two, wherein plural recesses (60, 61) are formed in the one synthetic resin part (41), separation distances from the weld surface (55a, 56a) to bottoms (60a,61a) of the recesses being different from each other, and the welding degree checking portions (60, 61) are configured by the bottoms (60a,61a) of the recesses, respectively, and/or
wherein plural projections (25, 26) are formed on the one synthetic resin part (30), positions of tops (25a, 26a) of the projections being lower in level than the weld surface (20a), and different from each other, and the welding degree checking portions (25, 26) are configured by the tops (25a, 26a) of the projections, respectively.

4. The method of manufacturing a synthetic resin assembly according to one of claims 1 to 3, wherein the two synthetic resin parts (30, 22; 40, 41) are parts constituting an ink cartridge (3).

5. The method of manufacturing a synthetic resin assembly according to one of claims 1 to 4, wherein the two synthetic resin parts are a cartridge body (40) which stores an ink to be supplied to an inkjet head (2), and a communication part forming member (41) which forms a communication part that allows an interior and exterior of the cartridge body (40) to communicate with each other.

6. The method of manufacturing a synthetic resin assembly according to one of claims 1 to 4, wherein the two synthetic resin parts are a container (30) that stores an ink to be supplied to an inkjet head (2), and a film (22) that is to be welded to the container (30).

7. The method of manufacturing a synthetic resin assembly according to claim 6, wherein the film (22) is a transparent film, and/or wherein the film is previously grain finished.

8. The method of manufacturing a synthetic resin assembly according to one of claims 6 to 7, wherein the container (30) has: plural projections (25, 26) which project from an outer face of the container (30); and a hill portion (20) which is further raised from the outer face than the plural projections (25, 26) ;
a groove (21) is formed in a surface portion of the hill portion (20), one end of the groove (21) communicating with an atmospheric air introducing port (32) which allows atmospheric air to be introduced into the container (30), and another end of the groove (21) communicating with an exterior of the container (30);
the film (22) is welded to a surface of the hill portion (20) to cover the groove (21) and the projections (25, 26); and
an atmospheric air introducing path (23) through which atmospheric air is introduced into the container (30) is defined by the groove (21) and the film (22).

9. The method according to one of claims 1 to 8, wherein
the one of the two synthetic resin parts is a synthetic resin-made cartridge body (40) which stores an ink;
the other one of the two synthetic resin-parts is a synthetic resin-made communication part forming member (41) forming a communication part that allows an interior and an exterior of the cartridge body (40) to communicate with each other,
the forming of the plural welding degree checking portions (60, 61) comprises forming two recesses in the communication part forming member (41), separation distances from the weld surface (55a, 56a) to the cartridge body (40) to bottoms (60a, 61a) of the recesses (60, 61) being different from each other; and
the determining of a welding degree is based on whether the bottom (60a, 61a) of each of the two recesses (60, 61) formed in the communication part forming member (41) is welded to the cartridge body (40) or not.

10. The method according to one of claims 1 to 8, wherein
the one of the two synthetic resin-parts is a synthetic resin-made container (30) which stores an ink to be supplied to an inkjet head (2),
the other one of the two synthetic resin-parts is a synthetic resin-made film (22),
the forming of the plural welding degree checking portions comprises forming two projections (25, 26) on the container (30), positions of tops (25a, 26a) of the projections (25, 26) being lower in level than the weld surface (20a) of the container (30) and the film (22), and different from each other; and
the determining of a welding degree is based on whether the top (25a, 26a) of each of the two projections (25, 26) is welded to the film (22) or not.

11. The method according to one of claims 1 to 8, wherein
the one of the two synthetic resin parts is a synthetic resin-made cartridge body (40) which stores an ink;
the other one of the two synthetic resin-parts is a synthetic resin-made communication part forming member (41) forming a communication part that allows an interior and an exterior of the cartridge body (40) to communicate with each other,
the forming of the plural welding degree checking portions comprises, in a first step, forming two recesses (60, 61) in the communication part forming member (41), separation distances from the weld surface (55a, 56a) to the cartridge body (40) to bottoms (60a, 61a) of the recesses (60, 61) being different from each other;
the welding of the two synthetic resin parts together comprises, in a second step, welding the cartridge body (40) to the communication part forming member (41) while causing a state where the bottom (60a) of one of the two recesses (60) which has a shorter separation distance from the weld surface (55a, 56a) is welded to the cartridge body (40), and the bottom (61a) of another one of the two recesses (61) which has a longer separation distance from the weld surface (55a, 56a) is not welded to the cartridge body (40).

12. The method according to claim 11, wherein
the determining of a welding degree of the two synthetic resin parts, in a third step after the second step, is based on whether the state where the bottom (60a) of one of the two recesses (60) which has a shorter separation distance from the weld surface (55a, 56a) is welded to the cartridge body (40), and the bottom (61a) of another one of the to recesses (61) which has a longer separation distance from the weld surface (55a, 56a) is not welded to the cartridge body (40) is attained or not.

13. The method according to one of claims 1 to 8, wherein
the one of the two synthetic resin-parts is a synthetic resin-made container (30) which stores an ink to be supplied to an inkjet head (2),
the other one of the two synthetic resin-parts is a synthetic resin-made film (22),
the forming of the plural welding degree checking portions comprises, in a first step, forming two projections (25, 26) on the container (30), positions of tops (25a, 26a) of the projections (25, 26) being lower in level than the weld surface (20a) of the container (30) and the film (22), and different from each other; and
the welding of the two synthetic resin parts together comprises, in a second step, welding the film (22) to the container (30) while causing a state where the top (25a) of one of the two projections (25) which has a shorter separation distance from the weld surface (20a) is welded to the film (22), and the top (26a) of another one of the two projections (26) which has a longer separation distance from the weld surface (20a) is not welded to the film (22).

14. The method according to claim 13, wherein
the determining of a welding degree of the two synthetic resin parts, in a third step after the second step, is based on whether the state where the top (25a) of one of the two projections (25) which has a shorter separation distance from the weld surface (20a) is welded to the film (22), and the top (26a) of another one of the two recesses (26) which has a longer separation distance from the weld surface (20a) is not welded to the film (22) is attained or not.

15. A synthetic resin assembly (4, 3) comprising:
a first synthetic resin part (30, 41) having plural welding degree checking portions (25, 26; 60, 61); and
a second synthetic resin part;
**characterised in that** the plural welding degree portions (25, 26; 60, 61) are lower in level than a weld surface thereof and separated from the weld surface by different separation distances, and **in that**
when the first synthetic resin part is welded in the weld surface to the second synthetic resin part, a degree of the welding is determined based on a state whether or not a top of at least one of the welding degree checking portions is welded to the second synthetic resin part, and a top of at least other one of the welding degree checking portions is not welded to the second synthetic resin part.

16. The synthetic resin assembly according to claim 15, wherein:
the second synthetic resin part is a synthetic resin-made cartridge body (40) which stores an ink;
the first synthetic resin part is a synthetic resin-made communication part forming member (41) forming a communication part that allows an interior and an exterior of the cartridge body (40) to communicate with each other,
the plurality welding degree checking portions have two recesses (60, 61) in which separation distances from the weld surface (55a, 56a) to bottoms (60a, 61a) of the recesses (60, 61) are different form each other; and
the bottom (60a) of one of the two recesses (60) which has a shorter separation distance from the weld surface (55a, 56a) is welded to the cartridge body (40), and the bottom (61a) of another one of the two recesses (61) which has a longer separation distance from the weld surface (55a, 56a) is not welded to the cartridge body (40).

17. The synthetic resin assembly according to claim 15, wherein:
the first synthetic resin part is a synthetic resin-made container (30) which stores an ink to be supplied to an inkjet head (2);
the second synthetic resin part is a synthetic resin-made film (22) which is welded to the container (30);
the plurality welding degree checking portions have two projections (25, 26) in which positions (25a, 26a) of tops are lower in level than the weld surface (20a), and different from each other; and
the top (25a) of one of the two projections (25) which has a shorter separation distance from the weld surface (20a) is welded to the film (22), and the top (26a) of another one of the two projections (26) which has a longer separation distance from the weld surface (20a) is not welded to the film (22).

## Patentansprüche

1. Verfahren des Herstellens eines Kunststoffaufbaues (4, 3) mit zwei Kunststoffteilen (30, 22; 40, 41), die zusammenzuschweißen sind, wobei das Verfahren die Schritte aufweist:
Bilden mehrerer Schweißgradprüfabschnitten (25, 26; 60, 61) in einem der zwei Kunststoffteile (30, 22; 40, 41), wobei die Schweißgratprüfabschnitte (25, 26; 60, 61) niedriger im Nivea als eine Schweißoberfläche (20a; 55a, 56a) des Kunststoffteiles sind und von der Schweißoberfläche (20a; 55a, 56a) durch unterschiedliche Trennabstände getrennt sind;
Zusammenschweißen der zwei Kunststoffteile (30, 22; 40, 41) ;
und Bestimmen eines Schweißgrades der zwei Kunststoffteile (30, 22; 40, 41) auf der Grundlage, ob jeder der mehreren Schweißgradprüfabschnitten (25, 26; 60, 61), die auf dem einen Kunststoffteil (30; 41) gebildet werden, an ein anderes Kunststoffteil (22;40) geschweißt ist oder nicht.

2. Verfahren des Herstellens eines Kunststoffaufbaues nach Anspruch 1,
bei dem eine Zahl der mehreren Schweißgradprüfabschnitte (25, 26; 60, 61), die in dem einen Kunststoffteil (30; 41) gebildet sind, gleich zwei ist, und
in dem Schritt des Bestimmens des Schweißgrades der Schweißgrad in dem Fall bestimmt wird, in dem einer der Schweißgradprüfabschnitte (25; 60), der einen kürzeren Trennabstand von der Schweißoberfläche (20a; 55a, 56a) aufweist, an das andere Kunststoffteil (22; 40) geschweißt ist, und ein anderer der Schweißgradprüfabschnitte (26; 61), der einen längeren Trennabstand aufweist, nicht an das andere Kunststoffteil (22; 40) geschweißt ist.

3. Verfahren des Herstellens eines Kunststoffaufbaues nach Anspruch 1 oder 2,
bei dem mehrere Ausnehmungen (60, 61) in dem einen Kunststoffteil (41) gebildet sind,
Trennabstände von der Schweißoberfläche (55a, 56a) zu Böden (60a, 61a) der Ausnehmungen sich voneinander unterscheiden und
die Schweißgradprüfabschnitte (60, 61) durch die Böden (60a, 61a) der Ausnehmungen aufgebaut sind, und/oder
bei dem mehrere Vorsprünge (25, 26) auf dem einen Kunststoffteil (30) gebildet sind,
Positionen von Oberseiten (25a, 26a) der Vorsprünge niedriger im Niveau als die Schweißoberfläche (20a) sind und sich voneinander unterscheiden, und
die Schweißgradprüfabschnitt (25, 26) durch die Oberseiten (25a, 26a) der Vorsprünge aufgebaut sind.

4. Verfahren des Herstellens eines Kunststoffaufbaues nach einem der Ansprüche 1 bis 3,
bei dem die zwei Kunststoffteile (30, 22; 40, 41) Teile sind, die eine Tintenpatrone (3) darstellen.

5. Verfahren des Herstellens eines Kunststoffaufbaues nach einem der Ansprüche 1 bis 4,
bei dem die zwei Kunststoffteile ein Patronenkörper (40), der Tinte speichert, die zu einem Tintenstrahlkopf (2) zu liefern ist, und ein Teil (41) zum Bilden eines Kommunikationsteiles, das ein Kommunikationsteil bildet, das einem Inneren und einem Äußeren des Patronenkörpers (40) erlaubt, miteinander zu kommunizieren, sind.

6. Verfahren des Herstellens eines Kunststoffaufbaues nach einem der Ansprüche 1 bis 4,
bei dem die zwei Kunststoffteile ein Behälter (30), der Tinte speichert, die zu einem Tintenstrahlkopf (2) zu liefern ist, und ein Film (22), der an den Behälter (30) zu schweißen ist, sind.

7. Verfahren des Herstellens eines Kunststoffaufbaues nach Anspruch 6,
bei dem der Film (22) ein transparenter Film ist und/oder bei dem der Film zuvor gekörnt ist.

8. Verfahren des Herstellens eines Kunststoffaufbaues nach einem der Ansprüche 6 bis 7,
bei dem der Behälter (30) aufweist:
mehrere Vorsprünge (25, 26), die von einer äußeren Fläche des Behälters (30) vorstehen; und einen Hügelabschnitt (20), der weiter von der äußeren Fläche der mehreren Vorsprünge (25, 26) angehoben ist;
eine Rille (21) auf einem Oberflächenabschnitt des Hügelabschnittes (20) gebildet ist, wobei ein Ende der Rille (21) mit einer Einführungsöffnung (32) von Atmosphärenluft, die Atmosphärenluft ermöglicht, in den Behälter (30) eingeführt zu werden, kommuniziert und ein anderes Ende der Rille (21) mit einem Äußeren des Behälters (30) kommuniziert;
der Film (22) an einer Oberfläche des Hügelabschnittes (20) geschweißt ist zum Bedecken der Rille (21) und der Vorsprünge (25, 26); und
ein Einführungspfad (23) für Atmosphärenluft, durch den Atmosphärenluft in den Behälter (30) eingeführt wird, durch die Rille (21) und den Film (22) definiert wird.

9. Verfahren nach einem der Ansprüche 1 bis 8, bei dem
das eine der zwei Kunststoffteile ein Patronenkörper (40) ist, der aus Kunststoff hergestellt ist, der Tinte speichert;
das andere der zwei Kunststoffteile ein Teil (41) zum Bilden eines Kommunikationsteiles ist, das aus Kunststoff hergestellt ist, das ein Kommunikationsteil bildet, das einem Inneren und einem Äußeren des Patronenkörper (40) ermöglicht, miteinander zu kommunizieren,
das Bilden der mehreren Schweißgradprüfabschnitte (60, 61) Bilden zweier Ausnehmungen in dem Teil (41) zum Bilden des Kommunikationsteiles aufweist, wobei die Trennabstände von der Schweißoberfläche (55a, 56a) des Patronenkörpers (40) zu den Böden (60a, 61a) der Ausnehmungen (60, 61) sich von einander unterscheiden; und
das Bestimmen eines Schweißgrades auf der Grundlage basiert, ob der Boden (60a, 61a) von jeder der zwei Ausnehmungen (60, 61), die in dem Teil (41) zum Bilden des Kommunikationsteiles gebildet sind, an den Patronenkörper (40) geschweißt ist oder nicht.

10. Verfahren nach einem der Ansprüche 1 bis 8, bei dem
das eine der zwei Kunststoffteile ein Behälter (30) ist, der aus Kunststoff hergestellt ist, der Tinte speichert, die zu einem Tintenstrahlkopf (2) zu liefern ist,
das andere der zwei Kunststoffteile ein Film (22) ist, der aus Kunststoff hergestellt ist,
das Bilden der mehreren Schweißgradprüfabschnitten Bilden von zwei Vorsprüngen (25, 26) auf dem Behälter (30) aufweist, wobei Positionen der Oberseiten (25a, 26a) der Vorsprünge (25, 26) niedriger im Niveau als die Schweißoberfläche (20a) des Behälters (30) und des Filmes (22) sind und sich voneinander unterscheiden; und
das Bestimmen des Schweißgrades auf der Grundlage basiert, ob die Oberseite (25a, 26a) von jedem der zwei Vorsprünge (25, 26) an den Film (22) geschweißt ist oder nicht.

11. Verfahren nach einem der Ansprüche 1 bis 8, bei dem
das eine der zwei Kunststoffteile ein Patronenkörper (40) ist, der aus Kunststoff hergestellt ist, der Tinte speichert;
das andere der zwei Kunststoffteile ein Teil (41) zum Bilden eines Kommunikationsteiles ist, das aus Kunststoff hergestellt ist, das ein Kommunikationsteil bildet, das einem Inneren und einem Äußeren des Patronenkörpers (40) ermöglicht, miteinander zu kommunizieren,
das Bilden der mehreren Schweißgradprüfabschnitte in einem ersten Schritt Bilden von zwei Ausnehmungen (60, 61) in dem Teil (41) zum Bilden des Kommunikationsteiles aufweist,
wobei Trennabstände von der Schweißoberfläche (55a, 56a) zu dem Patronenkörper (40) zu den Böden (60a, 61a) der Ausnehmungen (60, 61) sich voneinander unterscheiden;
das Zusammenschweißen der zwei Kunststoffteile in einem zweiten Schritt Schweißen des Patronenkörpers (40) an das Teil (41) zum Bilden des Kommunikationsteiles aufweist, während ein Zustand verursacht wird, in dem der Boden (60a) von einer der zwei Ausnehmungen (60), die einen kürzeren Trennabstand von der Schweißoberfläche (55a, 56a) aufweist, an den Patronenkörper (40) geschweißt wird und der Boden (61a) einer anderen der zwei Ausnehmungen (61), die einen längeren Trennabstand von der Schweißoberfläche (55a, 56a) aufweist, nicht an den Patronenkörper (40) geschweißt wird.

12. Verfahren nach Anspruch 11, bei dem
das Bestimmen eines Schweißgrades der zwei Kunststoffteile in einem dritten Schritt nach dem zweiten Schritt auf der Grundlage basiert, ob der Zustand, in dem Boden (60a) von einer der zwei Ausnehmungen (60), die einen kürzeren Trennabstand von der Schweißoberfläche (55a, 56a) aufweist, an den Patronenkörper (40) geschweißt ist, und der Boden (61a) von einer anderen der Ausnehmungen (61), die einen längeren Trennabstand von der Schweißoberfläche (55a, 56a) aufweist, nicht an den Patronenkörper (40) geschweißt ist, erzielt worden ist oder nicht.

13. Verfahren nach einem der Ansprüche 1 bis 8, bei dem
das eine der zwei Kunststoffteile ein Behälter (30) ist, der aus Kunststoff hergestellt ist, der Tinte speichert, die zu einem Tintenstrahlkopf (2) zu liefern ist,
das andere der zwei Kunststoffteile ein Film (22) ist, der aus Kunststoff hergestellt ist,
das Bilden der mehreren Schweißgradprüfabschnitte in einem ersten Schritt Bilden von zwei Vorsprüngen (25, 26) auf dem Behälter (30) aufweist, wobei die Positionen der Oberseiten (25a, 26a) der Vorsprünge (25, 26) niedriger im Niveau sind als die Schweißoberfläche (20a) des Behälters (30) und Filmes (22) und sich voneinander unterscheiden; und
das Zusammenschweißen der zwei Kunststoffteile in einem zweiten Schritt Schweißen des Filmes (22) an den Behälter (30) aufweist, während ein Zustand verursacht wird, in dem die Oberseite (25a) des einen der zwei Vorsprünge (25), der einen kürzeren Trennabstand von der Schweißoberfläche (20a) aufweist, an den Film (22) geschweißt wird, und die Oberseite (26a) des anderen der zwei Vorsprünge (26), der einen längeren Trennabstand von der Schweißoberfläche (20a) aufweist, nicht an den Film (22) geschweißt wird.

14. Verfahren nach Anspruch 13, bei dem
das Bestimmen eines Schweißgrades der zwei Kunststoffteile in einem dritten Schritt nach dem zweiten Schritt auf der Grundlage basiert, ob der Zustand, in dem die Oberseite (25a) des einen der zwei Vorsprünge (25), der einen kürzeren Trennabstand von der Schweißoberfläche (20a) aufweist, an den Film (22) geschweißt ist, und die Oberseite (26a) des anderen der zwei Ausnehmungen (26), der einen längeren Trennabstand von der Schweißoberfläche (20a) aufweist, nicht an den Film (22) geschweißt ist, erzielt worden ist oder nicht.

15. Kunstharzaufbau (4, 3) mit:
einem ersten Kunststoffteil (30, 41) mit mehreren Schweißgradprüfabschnitten (25, 26; 60, 61); und
einem zweiten Kunststoffteil;
**dadurch gekennzeichnet, daß** die mehreren Schweißgradabschnitte (25, 26; 60, 61) niedriger im Nivea sind als eine Schweißoberfläche davon und von der Schweißoberfläche durch verschieden Trennabstände getrennt sind, und dadurch, dass,
wenn das erste Kunststoffteil in der Schweißoberfläche an das zweite Kunststoffteil geschweißt ist, ein Grad des Schweißens bestimmt ist auf der Grundlage eines Zustandes, ob oder nicht eine Oberseite von mindestens eines der Schweißgradprüfabschnitte an das zweite Kunststoffteil geschweißt ist, und eine Oberseite von mindestens einem anderen der Schweißgradprüfabschnitte nicht an das zweite Kunststoffteil geschweißt ist.

16. Kunststoffaufbau nach Anspruch 15, bei dem:
das zweite Kunststoffteil ein Patronenkörper (40) ist, der aus einem Kunststoff hergestellt ist, der Tinte speichert;
das erste Kunststoffteil ein Teil (41) zum Bilden eines Kommunikationsteiles ist, das aus Kunststoff hergestellt ist, das ein Kommunikationsteil bildet, das einem Inneren und einem Äußeren des Patronenkörpers (40) ermöglicht, miteinander zu kommunizieren,
die Mehrzahl von Schweißgradprüfabschnitten zwei Ausnehmungen (60, 61) aufweist, bei denen Trennabstände von der Schweißoberfläche (55a, 56a) zu Böden (60a, 61a) der Ausnehmungen (60, 61) sich von einander unterscheiden; und
der Boden (60a) von einer der Ausnehmungen (60), die einen kürzeren Trennabstand von der Schweißoberfläche (55a, 56a) aufweist, an den Patronenkörper (40) geschweißt ist, und der Boden (61a) einer anderen der zwei Ausnehmungen (61), die einen längeren Trennabstand von der Schweißoberfläche (55a, 56a) aufweist, nicht an den Patronenkörper (40) geschweißt ist.

17. Kunstharzaufbau nach Anspruch 15, bei dem:
das erste Kunststoffteil ein Behälter (30) ist, der aus Kunststoff hergestellt ist, der Tinte speichert, die zu einem Tintenstrahlkopf (2) zu liefern ist;
das zweite Kunststoffteil ein Film (22) ist, der aus Kunststoff hergestellt ist, der an den Behälter (30) geschweißt ist;
die Mehrzahl von Schweißgradprüfabschnitten zwei Vorsprünge (25, 26) aufweist, bei denen Positionen (25a, 26a) von Oberseiten niedriger im Nivea als die Schweißoberfläche (20a) sind und sich voneinander unterscheiden; und
die Oberseite (25a) von einem der zwei Vorsprünge (25), der einen kürzeren Trennabstand von der Schweißoberfläche (20a) aufweist, an den Film (22) geschweißt ist, und die Oberseite (26a) eines anderen der zwei Vorsprünge (26), der einen längeren Trennabstand von der Schweißoberfläche (20a) aufweist, nicht an den Film (22) geschweißt ist.

## Revendications

1. Procédé pour fabriquer un ensemble de résine synthétique (4, 3) comprenant deux parties de résine synthétique (30, 22 ; 40, 41) qui doivent être soudées ensemble, le procédé comprenant les étapes suivantes :
former plusieurs parties de vérification de degré de soudage (25, 26 ; 60, 61) dans l'une des deux parties de résine synthétique (30, 22 ; 40, 41), les parties de vérification de degré de soudage (25, 26 ; 60, 61) étant plus basses du point de vue du niveau qu'une surface de soudure (20a ; 55a, 56a) de la partie de résine synthétique et séparées de la surface de soudure (20a ; 55a, 56a) par différentes distances de séparation ;
souder les deux parties de résine synthétique (30, 22 ; 40, 41) ensemble ; et déterminer un degré de soudage des deux parties de résine synthétique (30, 22 ; 40, 41) selon si chacune des plusieurs parties de vérification de degré de soudage (25, 26 ; 60, 61) formées dans une partie de résine synthétique (30 ; 41) est soudée sur une autre partie de résine synthétique (22 ; 40) ou pas.

2. Procédé pour fabriquer un ensemble de résine synthétique selon la revendication 1, dans lequel un nombre de plusieurs parties de vérification de degré de soudage (25, 26 ; 60, 61) formées dans une partie de résine synthétique (30 ; 41) est de deux, et à l'étape consistant à déterminer le degré de soudage, le degré de soudage est déterminé comme étant normal dans le cas dans lequel l'une des parties de vérification de degré de soudage (25 ; 60) qui a une plus courte distance de séparation de la surface de soudure (20a ; 55a, 56a) est soudée sur l'autre partie de résine synthétique (22 ; 40), et une autre des parties de vérification de degré de soudage (26 ; 61) qui a une plus longue distance de séparation n'est pas soudée sur l'autre partie de résine synthétique (22 ; 40).

3. Procédé pour fabriquer un ensemble de résine synthétique selon la revendication 1 ou 2, dans lequel plusieurs évidements (60, 61) sont formés dans la une partie de résine synthétique (41), les distances de séparation de la surface de soudure (55a, 56a) jusqu'aux fonds (60a, 61a) des évidements étant différentes entre elles, et les parties de vérification de degré de soudage (60, 61) sont configurées par les fonds (60a, 61a) des évidements, respectivement, et/ou
dans lequel plusieurs saillies (25, 26) sont formées sur la une partie de résine synthétique (30), les positions sur les parties supérieures (25a, 26a) des saillies étant plus basses du point de vue du niveau que la surface de soudure (20a) et différentes entre elles, et les parties de vérification de degré de soudage (25, 26) sont configurées par les parties supérieures (25a, 26a) des saillies, respectivement.

4. Procédé pour fabriquer un ensemble de résine synthétique selon l'une quelconque des revendications 1 à 3, dans lequel les deux parties de résine synthétique (30, 22 ; 40, 41) sont des pièces constituant une cartouche d'encre (3).

5. Procédé pour fabriquer un ensemble de résine synthétique selon l'une quelconque des revendications 1 à 4, dans lequel les deux parties de résine synthétique sont un corps de cartouche (40) qui stocke une encre à alimenter à une tête de jet d'encre (2), et un élément de formation de partie de communication (41) qui forme une partie de communication qui permet à un intérieur et à un extérieur du corps de cartouche (40) de communiquer entre eux.

6. Procédé pour fabriquer un ensemble de résine synthétique selon l'une quelconque des revendications 1 à 4, dans lequel les deux parties de résine synthétique sont un récipient (30) qui stocke une encre à alimenter à une tête de jet d'encre (2), et un film (22) qui doit être soudé sur le récipient (30).

7. Procédé pour fabriquer un ensemble de résine synthétique selon la revendication 6, dans lequel le film (22) est un film transparent et/ou dans lequel le film est préalablement grainé.

8. Procédé pour fabriquer un ensemble de résine synthétique selon l'une quelconque des revendications 6 à 7, dans lequel le récipient (30) a : plusieurs saillies (25, 26) qui font saillie d'une face externe du récipient (30) ; et une partie formant colline (20) qui est davantage levée à partir de la face externe que la pluralité de saillies (25, 26) ;
une rainure (21) est formée dans une partie de surface de la partie formant colline (20), une extrémité de la rainure (21) communiquant avec un orifice d'introduction d'air atmosphérique (32) qui permet d'introduire l'air atmosphérique dans le récipient (30), et une autre extrémité de la rainure (21) communiquant avec un extérieur du récipient (30) ;
le film (22) est soudé sur une surface de la partie formant colline (20) afin de recouvrir la rainure (21) et les saillies (25, 26) ; et
une trajectoire d'introduction d'air atmosphérique (23) à travers laquelle l'air atmosphérique est introduit dans le récipient (30) est définie par la rainure (21) et le film (22).

9. Procédé selon l'une quelconque des revendications 1 à 8, dans lequel :
l'une des deux parties de résine synthétique est un corps de cartouche (40) réalisé à partir de résine synthétique qui stocke une encre ;
l'autre des deux parties de résine synthétique est un élément de formation de partie de communication (41) réalisé à partir de résine synthétique formant une partie de communication qui permet à un intérieur et à un extérieur du corps de cartouche (40) de communiquer entre eux,
la formation de la pluralité de parties de vérification de degré de soudage (60, 61) comprend l'étape consistant à former deux évidements dans l'élément de formation de partie de communication (41), les distances de séparation de la surface de soudure (55a, 56a) au corps de cartouche (40) jusqu'aux fonds (60a, 61a) des évidements (60, 61) étant différentes l'une de l'autre ; et
la détermination d'un degré de soudage dépend du fait que le fond (60a, 61a) de chacun des deux évidements (60, 61) formés dans l'élément de formation de partie de communication (41) est soudé au corps de cartouche (40) ou pas.

10. Procédé selon l'une quelconque des revendications 1 à 8, dans lequel l'une des deux parties de résine synthétique est un récipient (30) réalisé à partir de résine synthétique qui stocke une encre à alimenter à une tête de jet d'encre (2),
l'autre des deux parties de résine synthétique est un film (22) réalisé à partir de résine synthétique,
la formation de la pluralité de parties de vérification de degré de soudage comprend l'étape consistant à former deux saillies (25, 26) sur le récipient (30), les positions des parties supérieures (25a, 26a) des saillies (25, 26) étant plus basses du point de vue du niveau que la surface de soudure (20a) du récipient (30) et du film (22), et différentes l'une de l'autre ; et
la détermination d'un degré de soudage dépend du fait que la partie supérieure (25a, 26a) de chacune des deux saillies (25, 26) est soudée sur le film (22) ou pas.

11. Procédé selon l'une quelconque des revendications 1 à 8, dans lequel :
l'une des deux parties de résine synthétique est un corps de cartouche (40) réalisé à partir de résine synthétique qui stocke une encre ;
l'autre des deux parties de résine synthétique est un élément de formation de partie de communication (41) réalisé à partir de résine synthétique formant une partie de communication qui permet à un intérieur et à un extérieur du corps de cartouche (40) de communiquer entre eux,
la formation de la pluralité de parties de vérification de degré de soudage comprend, dans une première étape, la formation de deux évidements (60, 61) dans l'élément de formation de partie de communication (41), les distances de séparation de la surface de soudure (55a, 56a) au corps de cartouche (40) jusqu'aux fonds (60a, 61a) des évidements (60, 61) étant différentes l'une de l'autre ;
le soudage des deux parties de résine synthétique ensemble comprend, dans une deuxième étape, le soudage du corps de cartouche (40) sur l'élément de formation de partie de communication (41) tout en provoquant un état dans lequel le fond (60a) de l'un des deux évidements (60) qui a une plus courte distance de séparation de la surface de soudure (55a, 56a), est soudé au corps de cartouche (40), et le fond (61a) de l'autre parmi les deux évidements (61) qui a une plus longue distance de séparation de la surface de soudure (55a, 56a) n'est pas soudé sur le corps de cartouche (40).

12. Procédé selon la revendication 11, dans lequel :
la détermination d'un degré de soudage des deux parties de résine synthétique, dans une troisième étape après la deuxième étape, dépend du fait que l'état dans lequel le fond (60a) de l'un des deux évidements (60) qui a une plus courte distance de séparation de la surface de soudure (55a, 56a) est soudé au corps de cartouche (40), et le fond (61a) d'un autre parmi les deux évidements (61) qui a une plus longue distance de séparation de la surface de soudure (55a, 56a) n'est pas soudé sur le corps de cartouche (40), est atteinte ou pas.

13. Procédé selon l'une quelconque des revendications 1 à 8, dans lequel :
l'une des deux parties de résine synthétique est un récipient (30) réalisé à partir de résine synthétique qui stocke une encre à alimenter à une tête de jet d'encre (2),
l'autre parmi les deux parties de résine synthétique est un film (22) réalisé à partir de résine synthétique,
la formation de la pluralité de parties de vérification de degré de soudage comprend, dans une première étape, la formation de deux saillies (25, 26) sur le récipient (30), les positions des parties supérieures (25a, 26a) des saillies (25, 26) étant plus basses du point de vue du niveau que la surface de soudure (20a) du récipient (30) et du film (22), et différentes l'une de l'autre ; et
le soudage des deux parties de résine synthétique ensemble comprend, dans une deuxième étape, le soudage du film (22) sur le récipient (30), tout en provoquant un état dans lequel la partie supérieure (25a) de l'une des deux saillies (25) qui a une plus courte distance de séparation de la surface de soudure (20a), est soudée sur le film (22), et la partie supérieure (26a) d'une autre des deux saillies (26) qui a une plus longue distance de séparation de la surface de soudure (20a) n'est pas soudée sur le film (22).

14. Procédé selon la revendication 13, dans lequel :
la détermination d'un degré de soudage des deux parties de résine synthétique, dans une troisième étape après la deuxième étape, dépend du fait que l'état dans lequel la partie supérieure (25a) de l'une des deux saillies (25) qui a une plus courte distance de séparation de la surface de soudure (20a) est soudée sur le film (22), et la partie supérieure (26a) d'un autre parmi les deux évidements (26) qui a une plus longue distance de séparation de la surface de soudure (20a) n'est pas soudée sur le film (22), est atteinte ou pas.

15. Ensemble de résine synthétique (4, 3), comprenant :
une première partie de résine synthétique (30, 41) ayant plusieurs parties de vérification de degré de soudage (25, 26 ; 60, 61) ; et
une deuxième partie de résine synthétique ;
**caractérisé en ce que** la pluralité de parties de vérification de degré de soudage (25, 26 ; 60, 61) sont plus basses du point de vue du niveau que leur surface de soudure et séparées de la surface de soudure par des distances de séparation différentes, et **en ce que** :
lorsque la première partie de résine synthétique est soudée dans la surface de soudure à la deuxième partie de résine synthétique, on détermine un degré de soudage en fonction d'un état selon lequel une partie supérieure d'au moins l'une des parties de vérification de degré de soudage est soudée sur la deuxième partie de résine synthétique, et une partie supérieure d'au moins une autre des parties de vérification de degré de soudage n'est pas soudée sur la deuxième partie de résine synthétique ou pas.

16. Ensemble de résine synthétique selon la revendication 15, dans lequel :
la deuxième partie de résine synthétique est un corps de cartouche (40) réalisé à partir de résine synthétique qui stocke une encre ;
la première partie de résine synthétique est un élément de formation de partie de communication (41) réalisé à partir de résine synthétique, formant une partie de communication qui permet à un intérieur et à un extérieur du corps de cartouche (40) de communiquer entre eux,
la pluralité de parties de vérification de degré de soudage a deux évidements (60, 61) dans lesquels les distances de séparation de la surface de soudure (55a, 56a) jusqu'aux fonds (60a, 61a) des évidements (60, 61) sont différentes l'une de l'autre ; et
le fond (60a) de l'un des deux évidements (60) qui a une plus courte distance de séparation de la surface de soudure (55a, 56a) est soudé sur le corps de cartouche (40), et le fond (61a) d'un autre des deux évidements (61) qui a une plus longue distance de séparation de la surface de soudure (55a, 56a) n'est pas soudé sur le corps de cartouche (40).

17. Ensemble de résine synthétique selon la revendication 15, dans lequel :
la première partie de résine synthétique est un récipient (30) réalisé à partir de résine synthétique qui stocke une encre à alimenter à une tête de jet d'encre (2) ;
la deuxième partie de résine synthétique est un film (22) réalisé à partir de résine synthétique qui est soudé sur le récipient (30) ;
la pluralité de parties de vérification de degré de soudage a deux saillies (25, 26) dans lesquelles les positions (25a, 26a) des parties supérieures sont plus basses du point de vue du niveau que la surface de soudure (20a) et différentes l'une de l'autre ; et
la partie supérieure (25a) de l'une des deux saillies (25) qui a une plus courte distance de séparation de la surface de soudure (20a) est soudée sur le film (22), et la partie supérieure (26a) d'une autre des deux saillies (26) qui a une plus grande distance de séparation de la surface de soudure (20a) n'est pas soudée sur le film (22).
